(19) Europäisches Patentamt / European Patent Office / Office européen des brevets

(11) **EP 3 910 184 A1**

(12) **DEMANDE DE BREVET EUROPEEN**

(43) Date de publication:
**17.11.2021 Bulletin 2021/46**

(21) Numéro de dépôt: **21171774.9**

(22) Date de dépôt: **03.05.2021**

(51) Int Cl.:
*F02D 41/22* (2006.01)    *F02D 41/00* (2006.01)
*G01M 15/11* (2006.01)    *F02P 5/152* (2006.01)
*F02M 26/49* (2016.01)    *F02P 5/04* (2006.01)
*F02D 41/14* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.05.2020 FR 2004793**

(71) Demandeur: **RENAULT s.a.s.**
**92100 Boulogne-Billancourt (FR)**

(72) Inventeur: **GUEROUT, Romain**
**94350 VILLIERS SUR MARNE (FR)**

(54) **DISPOSITIF ET PROCÉDÉ DE DÉTECTION D'UNE DÉFAILLANCE D'UN MOTEUR À COMBUSTION INTERNE POUR VÉHICULE AUTOMOBILE**

(57)     Ce dispositif de détection (58) d'une défaillance d'un moteur à combustion interne associé à un circuit de recirculation partielle des gaz d'échappement à l'admission du moteur comprend un moyen de détection (60) d'un raté de combustion généralisé dans une pluralité de cylindres du moteur.

Ce dispositif comprend un module de réception (64) d'un terme de stabilité théorique du moteur pour un point de rendement de combustion choisi sans recirculation des gaz d'échappement, un module de détermination (66) d'un terme de stabilité apparent du moteur pour ledit point de rendement de combustion, un module de calcul (68) d'un critère de diagnostic en fonction du terme de stabilité théorique et du terme de stabilité apparent, et un module de comparaison (70) apte à comparer le critère de diagnostic calculé par le module de calcul (68) avec un seuil prédéterminé.

[Fig 3]

**Description**

La présente demande concerne un dispositif et un procédé de détection d'une défaillance d'un moteur à combustion interne pour véhicule automobile, plus particulièrement d'un moteur doté d'un circuit de recirculation partielle des gaz d'échappement à l'admission du moteur.

Dans les véhicules automobiles dotés d'un moteur à combustion interne, il peut se produire un phénomène de raté de combustion généralisé, également connu sous la dénomination anglo-saxonne « général misfire ». Un raté de combustion généralisé se produit lorsque tous les cylindres du moteur à combustion interne présentent des ratés de combustion. Un raté de combustion peut être défini, quel que soit un cylindre du moteur, comme un cycle de combustion pendant lequel il n'y a aucune combustion du mélange air carburant dans le cylindre ou bien pendant lequel la combustion dans le cylindre présente un rendement de combustion très faible.

Pour détecter un raté de combustion, on peut utiliser un estimateur de couple capable de mesurer ou de calculer le couple de combustion du mélange gazeux dans un cylindre du moteur. Un exemple d'un tel estimateur de couple, ou couplemètre, est décrit dans le document FR 2 793 558.

Bien qu'une telle solution permette de détecter la présence d'un raté de combustion généralisé, elle n'apporte pas pleine satisfaction. En effet, l'apparition d'un raté de combustion généralisé peut signifier un dysfonctionnement du circuit de recirculation des gaz d'échappement, ou encore une mauvaise qualité du carburant injecté, notamment un indice d'octane trop faible du carburant (par exemple, parce qu'il y a eu une erreur de remplissage du réservoir du véhicule) ou une résistance à l'évaporation trop forte du carburant (par exemple, parce-que le carburant s'est éventé dans le réservoir et qu'il a perdu une partie de ses composés légers). Il est particulièrement difficile de faire la distinction entre ces deux causes car le dysfonctionnement du circuit de recirculation des gaz d'échappement est un facteur aggravant pour la combustion d'un carburant de mauvaise qualité. Ainsi, un carburant qui serait de mauvaise qualité pourrait causer un raté de combustion généralisé lorsque la recirculation des gaz d'échappement est active et ne pas causer de raté de combustion généralisé lorsque la recirculation des gaz d'échappement est inactive, sans que la recirculation des gaz d'échappement soit la cause de ce dysfonctionnement.

L'invention a pour but de remédier à ces inconvénients.

Plus particulièrement, l'invention a pour but d'améliorer la détection d'un raté de combustion généralisé dans un moteur à combustion interne en déterminant la cause de ce raté de combustion généralisé.

A cet effet, il est proposé un dispositif de détection d'une défaillance d'un moteur à combustion interne pour véhicule automobile, le moteur étant associé à un circuit de recirculation partielle des gaz d'échappement à l'admission du moteur, le dispositif comprenant un moyen de détection d'un raté de combustion généralisé dans une pluralité de cylindres du moteur.

Selon une de ses caractéristiques générales, ce dispositif comprend un module de réception d'un terme de stabilité théorique du moteur pour au moins un point de rendement de combustion choisi sans recirculation des gaz d'échappement, un module de détermination d'un terme de stabilité apparent du moteur pour ledit point de rendement de combustion choisi sans recirculation des gaz d'échappement, un module de calcul d'un critère de diagnostic en fonction du terme de stabilité théorique reçu par le module de réception et du terme de stabilité apparent déterminé par le module de détermination, et un module de comparaison apte à comparer le critère de diagnostic calculé par le module de calcul avec un seuil prédéterminé.

En fonction du résultat de la comparaison du critère de diagnostic, on peut distinguer une défaillance de raté de combustion généralisé sans mise en cause du carburant, auquel cas on peut envisager une maintenance en atelier du circuit de recirculation, d'une défaillance liée à un carburant non conforme, auquel cas on peut envisager une vidange du carburant et un remplissage du réservoir.

Dans un mode de réalisation, le module de détermination est configuré pour déterminer le terme de stabilité apparent à partir d'un paramètre de sortie du moteur pendant une pluralité de combustions successives avec des paramètres d'entrée du moteur stabilisés, et en tenant compte d'un écart-type et/ou d'une moyenne de la pluralité de valeurs du paramètre de sortie lors des combustions respectives.

Une telle configuration permet de facilement déterminer un terme de stabilité apparent, quel que soit le point de rendement de combustion.

De préférence, le paramètre de sortie est choisi parmi un couple de combustion du mélange gazeux dans au moins un cylindre du moteur et une pression dans au moins un cylindre du moteur.

Dans un mode de réalisation, le module de détermination est configuré de telle sorte que le terme de stabilité apparent soit proportionnel à l'écart-type de la pluralité de valeurs du paramètre de sortie lors des combustions respectives et/ou inversement proportionnel à la moyenne de la pluralité de valeurs du paramètre de sortie lors des combustions respectives.

On peut de la sorte calculer facilement un terme de stabilité apparent à partir de quelques déterminations du paramètre de sortie.

Avantageusement, le module de calcul est configuré de telle sorte que le critère de diagnostic soit proportionnel à une différence du terme de stabilité théorique et du terme de stabilité apparent.

On peut en outre prévoir un module de balayage capable de paramétrer le moteur selon une pluralité de points de rendement de combustion, le module de réception étant configuré pour recevoir une pluralité de termes de stabilité théoriques pour ladite pluralité de points de rendement de combustion, le module de détermination étant configuré pour déterminer une pluralité de termes de stabilité apparents pour ladite pluralité de points de rendement de combustion, le module de calcul étant configuré pour calculer le critère de diagnostic en tenant compte des termes de stabilité théoriques et des termes de stabilité apparents pour au moins plusieurs de ladite pluralité de points de rendement de combustion.

En se basant sur une pluralité de points de rendement, on rend le diagnostic encore plus discriminant, ce qui améliore encore la robustesse du diagnostic.

Dans un mode de réalisation, le module de balayage est configuré de telle sorte que la pluralité de points de rendement de combustion comprenne une suite, par exemple arithmétique, d'un nombre prédéterminé de points de rendement de combustion de terme initial égal à un, et de dernier terme égal à un rendement de combustion prédéterminé.

Selon un autre aspect, il est proposé un groupe motopropulseur pour véhicule automobile comprenant un moteur à combustion interne, un circuit de recirculation des gaz d'échappement et un dispositif tel que défini précédemment.

Dans un mode de réalisation particulièrement avantageux, le groupe motopropulseur comprend en outre une machine électrique d'entrainement.

Dans un tel véhicule, le couple d'entraînement peut être fourni totalement ou partiellement par la machine électrique lorsque la détection de la défaillance est mise en œuvre. Aussi, lors de cette mise en œuvre, on peut compenser la perte de couple du moteur thermique par un apport de couple électrique, de manière à ne pas modifier le couple d'entraînement, et donc l'accélération, du véhicule.

Selon encore un autre aspect, il est proposé un procédé de détection d'une défaillance d'un moteur à combustion interne pour véhicule automobile, le moteur étant associé à un circuit de recirculation partielle des gaz d'échappement à l'admission du moteur, le procédé comprenant, successivement :

- une première étape au cours de laquelle on constate une condition d'un raté de combustion généralisé dans une pluralité de cylindres du moteur à combustion interne,
- une deuxième étape au cours de laquelle on désactive la recirculation des gaz d'échappement, l'avance à l'allumage étant telle que le moteur fonctionne à un point de rendement de combustion courant,
- une troisième étape au cours de laquelle on calcule un critère de diagnostic en tenant compte d'un terme de stabilité théorique du moteur au point de rendement de combustion courant et d'un terme de stabilité apparent du moteur au point de rendement de combustion courant,
- une quatrième étape au cours de laquelle on compare le critère de diagnostic à un seuil prédéterminé.

Dans un mode de mise en œuvre, dans la deuxième étape, on règle l'avance à l'allumage à un point de rendement de combustion optimal, et, dans la troisième étape, on met en œuvre un balayage de l'avance à l'allumage du moteur entre le point de rendement de combustion optimal et un point de rendement de combustion prédéterminé, le critère de diagnostic étant calculé en tenant compte d'une pluralité de termes de stabilité théoriques et de termes de stabilité apparents aux points de rendement de combustion balayés.

D'autres buts, caractéristiques et avantages de l'invention apparaîtront à la lecture de la description suivante, donnée uniquement à titre d'exemple non limitatif, et faite en référence aux dessins annexés sur lesquels :

[Fig. 1] représente schématiquement un groupe motopropulseur selon un mode de réalisation de l'invention,
[Fig. 2] représente schématiquement un moteur à combustion interne équipant le groupe motopropulseur de la figure 1,
[Fig. 3] représente un dispositif de détection d'une défaillance du moteur à combustion interne de la figure 2, et

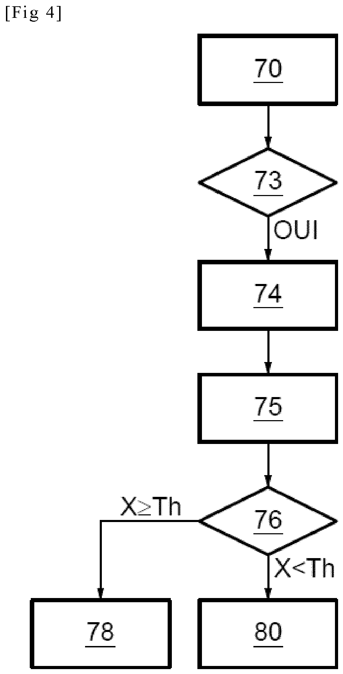

[Fig. 4] représente schématiquement un procédé de détection pouvant être mis en œuvre au moyen du dispositif de la figure 3.

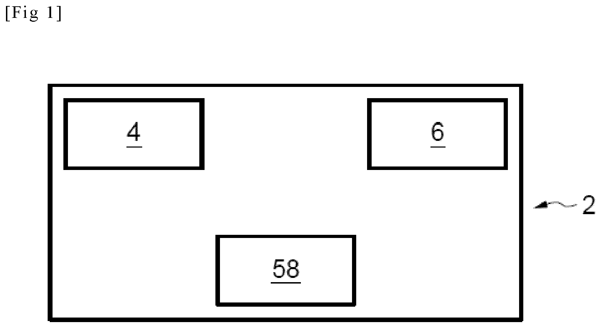

En référence à la figure 1, on a schématiquement représenté un groupe motopropulseur 2. Le groupe motopropulseur 2 est destiné à assurer la propulsion d'un véhicule automobile (non représenté). En l'espèce, le véhicule automobile est à propulsion hybride thermique électrique. Toutefois, on peut sans sortir du cadre de l'invention envisager que le groupe motopropulseur 2 soit destiné être incorporé dans un véhicule à propulsion différente, en particulier un véhicule à propulsion thermique pure.

Le groupe motopropulseur 2 comporte un moteur à combustion interne 4 et une machine électrique d'entraînement 6. Le moteur à combustion interne 4 et la machine électrique d'entraînement 6 sont mécaniquement connectés à des roues motrices (non représentées) du véhicule au moyen d'une boîte de vitesses (non représentée) et d'un ensemble de réduction et de transmission (non représenté).

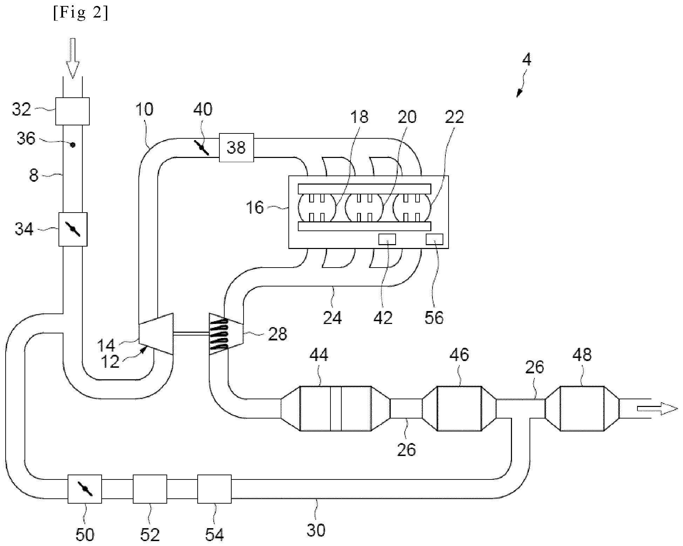

En référence à la figure 2, on a schématiquement représenté le moteur à combustion interne 4 et son circuit d'air associé. Dans l'exemple illustré, le moteur à combustion interne 4 est un moteur à allumage commandé, à injection directe et suralimenté.

Le moteur 4 comprend un conduit d'admission à basse pression 8 et un conduit d'admission à haute pression 10. Un turbocompresseur 12 comprend un compresseur 14 situé entre les conduits d'admission 8 et 10.

Le moteur 4 comporte un bloc moteur ou carter-cylindres 16. En l'espèce, le carter-cylindres 16 comprend trois cylindres 18, 20 et 22.

Le moteur 4 comporte un conduit d'échappement à haute pression 24 et un conduit d'échappement à basse pression 26 situé en aval du conduit d'échappement à haute pression 24. Le turbocompresseur 12 comprend une turbine 28 disposée entre les conduits 24 et 26.

Dans l'exemple illustré, la turbine 28 est une turbine à géométrie variable, également connue sous la dénomination anglo-saxonne « Variable Nozzle Turbine » ou sous l'acronyme correspondant « VNT ». Les ailettes de la turbine 28 sont inclinables pour pouvoir ajuster l'énergie de détente prélevée sur les gaz d'échappement. On peut en variante, sans sortir du cadre de l'invention, envisager l'utilisation d'un turbocompresseur avec une turbine à géométrie fixe, éventuellement associée à un circuit de dérivation des gaz avec une vanne de réglage du débit, également connue sous la dénomination anglo-saxonne « Waste Gâte ».

Le moteur 4 comporte un circuit de recirculation partielle à basse pression des gaz d'échappement à l'admission du moteur, comprenant un conduit de recirculation 30 des gaz d'échappement, également connu sous la dénomination anglo-saxonne « exhaust gas recirculation », ou sous l'acronyme correspondant « EGR ». Le conduit 30 raccorde les conduits 8 et 26. En d'autres termes, le conduit 30 est un conduit EGR à basse pression.

On ne sort toutefois pas du cadre de l'invention en envisageant un circuit de recirculation partielle à haute pression des gaz d'échappement à l'admission du moteur, comprenant un conduit EGR à haute pression. Dans ce cas, le conduit de recirculation serait raccordé au conduit d'échappement 24, c'est-à-dire en amont de la turbine 28, pour réintroduire les gaz sur le conduit d'admission 10, en aval du compresseur 14.

Le moteur 4 comporte un filtre à air 32 et une vanne d'admission 34 disposés sur le conduit 8. La vanne d'admission 34 permet de fermer partiellement l'admission du moteur 4 pour créer une dépression en aval de la vanne 34, qui aspire des gaz d'échappement via le conduit de recirculation 30. Le conduit 8 comporte un débitmètre 36 permettant de mesurer le débit massique d'air admis à travers la vanne 34.

Le moteur 4 comporte un refroidisseur des gaz d'admission suralimentés 38 et une vanne de réglage des gaz d'admission 40, également connue sous la dénomination de boîtier-papillon, disposés sur le conduit 10.

Le moteur 4 comporte un estimateur de couple 42 capable d'estimer le couple moyen de combustion du mélange gazeux dans chacun des cylindres 18, 20 et 22. Par exemple, on peut utiliser le couplemètre de la publication FR 2 793 558.

Le moteur 4 comporte un catalyseur trois voies 44, un filtre à particules 46 et un catalyseur trois voies 48 disposés sur le conduit 26.

Le catalyseur 44 est ici un catalyseur chauffé électriquement, également connu sous la dénomination anglo-saxonne « Electrically Heated Catalyst » ou sous l'acronyme correspondant « EHC ». Dans l'exemple illustré, le catalyseur 44 est prévu avec deux pains successifs. Le filtre 46 est, dans l'exemple illustré, un filtre à particules essence, également connu sous la dénomination anglo-saxonne « Gasoline Particulate Filter » ou sous l'acronyme correspondant « GPF ». Le catalyseur 48 est un catalyseur sous plancher du véhicule. En aval du catalyseur 48, les gaz d'échappement peuvent être évacués dans l'atmosphère extérieure.

Le moteur 4 comprend une vanne de réglage des gaz recyclés 50, également connue sous la dénomination vanne EGR, un filtre 52 et un refroidisseur 54 montés sur le conduit de recirculation 30. Le conduit de recirculation 30 prélève des gaz d'échappement situés entre le filtre à particules 46 et le catalyseur 48.

Les cylindres 18, 20 et 22 sont chacun dotés d'une bougie d'allumage (non représentée). Un dispositif de gestion de l'avance à l'allumage 56 permet de régler l'avance à l'allumage des bougies d'allumage des cylindres 18, 20 et 22.

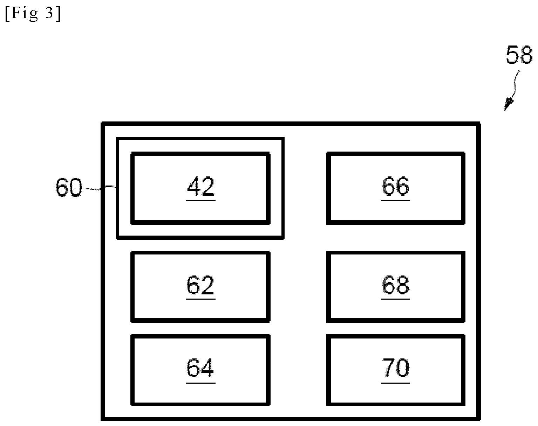

En référence aux figures 1 et 3, le groupe motopropulseur 2 comporte un dispositif de détection 58 d'une défaillance du moteur à combustion interne 4. Plus particulièrement, le dispositif de détection 58 a pour but de déterminer l'apparition et la cause d'un raté de combustion généralisé au sein des cylindres 18, 20 et 22 du moteur 4.

En référence à la figure 3, le dispositif de détection 58 comprend un moyen de détection 60 capable de détecter l'apparition d'un raté de combustion généralisé dans les cylindres 18, 20 et 22 du moteur 4. Dans l'exemple illustré, le moyen de détection 60 comprend l'estimateur de couple 42.

Le dispositif de détection 58 comprend un module de balayage 62. Le module de balayage 62 est en liaison d'informations avec le dispositif de gestion de l'avance à l'allumage 56. De ce fait, le module de balayage 62 est capable de paramétrer les bougies d'allumage des cylindres 18, 20 et 22 selon différentes valeurs d'avance à l'allumage, permettant ainsi de réaliser une pluralité de points de rendement de combustion.

Dans la présente demande, l'expression « rendement de combustion » désigne le couple obtenu pour une valeur donnée d'avance à l'allumage divisé par le couple optimal, ledit couple optimal étant défini comme celui qui est obtenu quand l'avance à l'allumage égale l'avance à l'allumage optimale, ladite avance optimale étant définie comme l'avance à l'allumage qui maximise la valeur du couple produit par le moteur sans que le moteur ne présente de cliquetis, pour des valeurs identiques des autres paramètres de fonctionnement du moteur (débit d'air, débit de gaz d'échappement recyclés à l'admission, débit de carburant, etc.). En d'autres termes, au sens de la présente demande, l'avance à l'allumage optimale est définie comme ce que l'homme de métier connaît sous l'expression « avance à la limite de cliquetis ».

Plus particulièrement, dans l'exemple illustré, le module de balayage 62 est configuré pour déterminer une suite S={$S_0$, $S_1$, ..., $S_n$}, en l'espèce une suite arithmétique, de points de rendement de combustion du moteur à combustion interne 4. Dans l'exemple illustré, le rendement de combustion initial $S_0$ de la suite S est égal à 1, ce qui correspond à une avance à l'allumage optimale. Dans l'exemple illustré, le dernier rendement de combustion $S_n$ de la suite S est égal à 0,2. Par exemple, la différence commune $S_{i+1}-S_i$ entre les termes de la suite S est égale à -0,2. De ce fait, la suite S s'écrit comme suit :

$$[\text{Math } 1]$$

$$S = \{1 \, ; \, 0,8 \, ; \, 0,6 \, ; \, 0,4 \, ; \, 0,2\}$$

Le module de balayage 62 est doté des moyens matériels et logiciels pour modifier le réglage de l'avance à l'allumage du moteur 4 pour que le rendement de combustion dans les cylindres 18, 20 et 22 prennent successivement les valeurs de la suite S.

Le dispositif de détection 58 comprend un module de réception 64. Le module de réception 64 est doté des moyens matériels et logiciels pour mémoriser, quel que soit un point de rendement de combustion, un terme de stabilité théorique du moteur à combustion interne 4 pour le point de rendement de combustion, le moteur à combustion interne 4 fonctionnant sans recirculation des gaz d'échappement. Par exemple, les termes de stabilité théoriques peuvent être obtenus lors d'essais sur banc.

Le dispositif de détection 58 comporte un module de détermination 66. Le module de détermination 66 est doté des moyens matériels et logiciels pour déterminer, lors du fonctionnement du moteur 4 et quel que soit un rendement de combustion du moteur 4, un terme de stabilité apparent du moteur 4. A cet égard, le module de détermination 66 est en liaison d'informations avec l'estimateur de couple 42.

Le dispositif de détection 58 comporte un module de calcul 68. Le module 68 est en communication d'informations avec le module de réception 64 et le module de détermination 66. Le module de calcul 68 est doté des moyens matériels et logiciels pour calculer un critère de diagnostic en tenant compte du(des) terme(s) de stabilité théorique(s) et du(des) terme(s) de stabilité apparent(s).

Le dispositif de détection 58 comporte un module de comparaison 70. Le module de comparaison 70 est doté des moyens matériels et logiciels pour comparer le critère de diagnostic calculé par le module de calcul 68 avec un seuil prédéterminé Th. Par exemple, le seuil prédéterminé peut être déterminé par des essais sur banc.

En référence à la figure 3, on a schématiquement représenté un procédé selon un exemple de mise en œuvre de l'invention.

Le procédé comprend une étape d'initialisation 72 pouvant être mise en œuvre de manière périodique, par exemple chaque demi-seconde lorsque le moteur à combustion interne 4 est en fonctionnement.

Au cours de l'étape 72, le moteur à combustion interne 4 est réglé avec les paramètres d'entrée habituels sur son point de fonctionnement régime - charge. Plus précisément, l'enfoncement de la pédale d'accélérateur du véhicule par le conducteur est interprété par un calculateur (non représenté) du moteur comme la volonté du conducteur d'obtenir une certaine accélération. Le calculateur traduit l'enfoncement, pour un régime du moteur donné, en une consigne de couple CSP. Le calculateur détermine un certain nombre de paramètres d'entrée du moteur pour produire ce couple, parmi lesquels une quantité d'air Qair, une quantité de carburant Qcarb, une quantité de gaz d'échappement recyclés Gegr, une avance à l'allumage AA.

A partir de ces paramètres, on ajuste la position de la vanne de réglage des gaz d'admission 40, de la vanne de réglage des gaz recyclés 50, de la vanne d'admission 34, du dispositif de gestion de l'avance à l'allumage 56, on règle une durée d'ouverture des injecteurs de carburant et on fait jaillir une étincelle aux bornes des bougies.

Au cours de l'étape 72, l'avance à l'allumage est de préférence choisie comme étant égale à l'avance optimale, c'est-à-dire l'avance à l'allumage par rapport au point mort haut de combustion dans le cylindre qui permet de maximiser la valeur du couple qui est produit pour des valeurs constantes des autres paramètres de fonctionnement tout en ne produisant pas de cliquetis.

Le procédé comporte ensuite une étape de test 73 au cours de laquelle on détermine si un raté de combustion généralisé s'est produit. Si, à l'issue de l'étape 73, aucun raté de combustion généralisé ne s'est produit, il est mis fin au procédé. Si, à l'issue étape 73, il est déterminé qu'un raté de combustion généralisé s'est produit au cours de la demi-seconde précédente, on met en œuvre une étape 74.

Au cours de l'étape 74, le dispositif de détection 58 ferme la vanne de réglage des gaz recyclés 50, de manière à réduire le débit de gaz recirculés à zéro (0). Dans le même temps, le dispositif de gestion de l'avance à l'allumage 56 modifie le réglage de l'avance à l'allumage pour régler celle-ci à la valeur optimale pour ce point de fonctionnement sans recirculation des gaz d'échappement.

Le procédé comprend ensuite une étape 75 au cours de laquelle le module de balayage 62 procède à un balayage d'avances à l'allumage. En d'autres termes, on procède à des retraits d'avance à l'allumage successifs, de telle sorte que le point de rendement de combustion du moteur à combustion 4 prenne successivement les valeurs de la suite S.

Au cours du balayage de l'étape 75, quel que soit un point de rendement x appartenant à la suite S, on estime, au cours de dix combustions successives au point de rendement x, les couples du mélange dans les cylindres 18, 20 et 22. Au cours des dix combustions successives, les paramètres d'entrée du moteur, en particulier l'avance à l'allumage, l'ouverture de la vanne d'admission 40 et la quantité de carburant injectée sont constantes. On calcule alors, pour le rendement x et quelle que soit une combustion parmi les dix combustions successives, le couple moyen du mélange dans les cylindres du moteur 4 :

[Math 2]

$$T_{i,x} = \frac{T_{18,i,x} + T_{22,i,x} + T_{22,i,x}}{3}$$

où $T_{i,x}$ est le couple moyen du mélange dans les cylindres du moteur 4 lors de la ième combustion successive au point de rendement x, et $T_{18,i,x}$, $T_{20,i,x}$, $T_{22,i,x}$ sont respectivement les couples du mélange dans les cylindres 18, 20, 22 lors de la ième combustion successive au point de rendement x.

On peut, sans sortir du cadre de l'invention, envisager un nombre différent de combustions successives.

On calcule le coefficient de variation des couples $T_{i,x}$ déterminés et on obtient un terme de stabilité apparent :

[Math 3]

$$TSA_x = \frac{\sqrt{\sum_{i=1}^{10} \left[ \left( T_{i,x} - \frac{\sum_{j=1}^{10} T_{j,x}}{10} \right)^2 \right]}}{\sum_{i=1}^{10} T_{i,x}}$$

où $TSA_x$ est le terme de stabilité apparent du moteur à combustion interne 4 fonctionnant au point de rendement x. En d'autres termes, TSAX est le quotient de l'écart-type des couples moyens $T_{i,x}$ par la moyenne des couples moyens $T_{i,x}$, et ce pour i allant de 1 à 10.

On peut, sans sortir du cadre de l'invention, envisager de déterminer les termes de stabilité en utilisant un autre paramètre de sortie du moteur à combustion interne 4. Par exemple, les termes de stabilité du moteur 4 peuvent être déterminés en utilisant une pression dans les cylindres 18, 20 et 22.

Toujours au cours de l'étape 75, on reçoit un terme de stabilité théorique TSTX déterminé sur banc avec les mêmes paramètres d'entrée du moteur, la qualité du carburant et le bon fonctionnement du circuit de recirculation partielle des gaz d'échappement à l'admission étant vérifiés. Après avoir fait ceci pour tous les points de rendement de la suite précitée, on calcule, au cours de l'étape 75, le critère de diagnostic en appliquant l'intégrale :

[Math 4]

$$X = \int_{x \in S} (TSA_x - TST_x).dx$$

Ainsi, le critère de diagnostic X est proportionnel et de même signe que la différence entre, respectivement, les termes de stabilité apparents et les termes de stabilité théoriques.

Le procédé comprend une étape 76 au cours de laquelle le module de comparaison 70 compare le critère de diagnostic X calculé au cours de l'étape 75 avec le seuil prédéterminé Th. Par exemple, le seuil Th est prédéterminé par des essais sur banc.

Si, au cours de l'étape 76, il est déterminé que le critère X est supérieur ou égal au seuil Th, alors le carburant injecté dans le moteur à combustion interne 4 n'est pas conforme. On applique alors une étape 78 au cours de laquelle on suggère de procéder à une vidange du carburant et à un remplissage du réservoir.

Si, au cours de l'étape 76, il a été déterminé que le critère de diagnostic X était strictement inférieur au seuil prédéterminé Th, alors le carburant n'est pas en cause et la défaillance provient d'un défaut du circuit de recirculation des gaz d'échappement. On applique alors une étape 80 cours de laquelle on suggère au conducteur d'envisager une maintenance en atelier de son véhicule automobile.

Au cours du procédé décrit, la mise en œuvre d'un balayage de l'avance à l'allumage entraîne une chute du couple du moteur à 20 % de sa valeur initiale telle qu'elle a pu être requise par le conducteur via la pédale d'accélérateur. Il peut en résulter une gêne pour les passagers. Dans l'exemple illustré, le groupe motopropulseur 2 étant doté d'une machine électrique d'entraînement 6, on pourra avantageusement compenser la perte de couple du moteur à combustion interne 4 par un apport équivalent de couple fourni par la machine électrique d'entraînement 6, de manière à ne pas modifier l'accélération du véhicule. Il en résulte la possibilité de détecter la défaillance de ratés de combustion généralisés tout en déterminant la cause de ces ratés, sans occasionner pour autant une gêne significative pour les occupants du véhicule automobile.

## Revendications

1. Dispositif de détection (58) d'une défaillance d'un moteur à combustion interne (4) pour véhicule automobile, le moteur (4) étant associé à un circuit de recirculation partielle (30) des gaz d'échappement à l'admission du moteur, le dispositif (58) comprenant un moyen de détection (60) d'un raté de combustion généralisé dans une pluralité de cylindres (18, 20, 22) du moteur (4), **caractérisé en ce qu'**il comprend un module de réception (64) d'un terme de stabilité théorique du moteur (4) pour au moins un point de rendement de combustion choisi sans recirculation des gaz d'échappement, un module de détermination (66) d'un terme de stabilité apparent du moteur (4) pour ledit point de rendement de combustion choisi sans recirculation des gaz d'échappement, un module de calcul (68) d'un critère de diagnostic (X) en fonction du terme de stabilité théorique reçu par le module de réception (64) et du terme de stabilité apparent déterminé par le module de détermination (66), et un module de comparaison (70) apte à comparer le critère de diagnostic (X) calculé par le module de calcul (68) avec un seuil prédéterminé (Th).

2. Dispositif (58) selon la revendication 1, dans lequel le module de détermination (66) est configuré pour déterminer le terme de stabilité apparent à partir d'un paramètre de sortie du moteur (4) pendant une pluralité de combustions successives avec des paramètres d'entrée du moteur (4) stabilisés, et en tenant compte d'un écart-type et/ou d'une moyenne de la pluralité de valeurs du paramètre de sortie lors des combustions respectives, le paramètre de sortie étant de préférence choisi parmi un couple de combustion du mélange gazeux dans au moins un cylindre (18, 20, 22) du moteur (4) et une pression dans au moins un cylindre (18, 20, 22) du moteur (4).

3. Dispositif (58) selon la revendication 2, dans lequel le module de détermination (66) est configuré de telle sorte que le terme de stabilité apparent soit proportionnel à l'écart-type de la pluralité de valeurs du paramètre de sortie lors des combustions respectives et/ou inversement proportionnel à la moyenne de la pluralité de valeurs du paramètre de sortie lors des combustions respectives.

4. Dispositif (58) selon l'une quelconque des revendications 1 à 3, dans lequel le module de calcul (68) est configuré de telle sorte que le critère de diagnostic (X) soit proportionnel à une différence du terme de stabilité théorique et du terme de stabilité apparent.

5. Dispositif (58) selon l'une quelconque des revendications 1 à 4, comprenant un module de balayage (62) capable de paramétrer le moteur (4) selon une pluralité de points de rendement de combustion, le module de réception (64) étant configuré pour recevoir une pluralité de termes de stabilité théoriques pour ladite pluralité de points de rendement de combustion, le module de détermination (66) étant configuré pour déterminer une pluralité de termes de stabilité apparents pour ladite pluralité de points de rendement de combustion, le module de calcul (68) étant configuré pour calculer le critère de diagnostic (X) en tenant compte des termes de stabilité théoriques et des termes de stabilité apparents pour au moins plusieurs de ladite pluralité de points de rendement de combustion.

6. Dispositif (58) selon la revendication 5, dans lequel le module de balayage (62) est configuré de telle sorte que la pluralité de points de rendement de combustion comprenne une suite arithmétique d'un nombre prédéterminé de points de rendement de combustion de terme initial égal à un, et de dernier terme égal à un rendement de combustion prédéterminé.

7. Groupe motopropulseur (2) pour véhicule automobile comprenant un moteur à combustion interne (4), un circuit de recirculation (30) des gaz d'échappement et un dispositif (58) selon l'une quelconque des revendications 1 à 6.

8. Groupe motopropulseur (2) selon la revendication 7, comprenant en outre une machine électrique d'entrainement (6).

9. Procédé de détection d'une défaillance d'un moteur à combustion interne (4) pour véhicule automobile, le moteur (4) étant associé à un circuit de recirculation (30) partielle des gaz d'échappement à l'admission du moteur, le procédé comprenant, successivement :

   - une première étape (73) au cours de laquelle on constate une condition d'un raté de combustion généralisé dans une pluralité de cylindres (18, 20, 22) du moteur à combustion interne (4),
   - une deuxième étape (74) au cours de laquelle on désactive la recirculation des gaz d'échappement, l'avance à l'allumage étant telle que le moteur (4) fonctionne à un point de rendement de combustion courant,
   - une troisième étape (75) au cours de laquelle on calcule un critère de diagnostic (X) en tenant compte d'un terme de stabilité théorique du moteur (4) au point de rendement de combustion courant et d'un terme de stabilité apparent du moteur (4) au point de rendement de combustion courant,
   - une quatrième étape (76) au cours de laquelle on compare le critère de diagnostic (X) à un seuil prédéterminé (Th).

10. Procédé selon la revendication 9, dans lequel, dans la deuxième étape (74), on règle l'avance à l'allumage à un point de rendement de combustion optimal, et dans lequel, dans la troisième étape (75), on met en œuvre un balayage de l'avance à l'allumage du moteur entre le point de rendement de combustion optimal et un point de rendement de combustion prédéterminé, le critère de diagnostic (X) étant calculé en tenant compte d'une pluralité de termes de stabilité théoriques et de termes de stabilité apparents aux points de rendement de combustion balayés.

[Fig 1]

[Fig 2]

[Fig 3]

[Fig 4]

**EP 3 910 184 A1**

Europäisches Patentamt

European Patent Office

Office européen des brevets

# RAPPORT DE RECHERCHE EUROPEENNE

Numéro de la demande

EP 21 17 1774

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP H05 280431 A (TOYOTA MOTOR CORPORATION) 26 octobre 1993 (1993-10-26) | 1,7-9 | INV. F02D41/22 |
| Y | * alinéas [0016] - [0023]; figures 1,2 * ----- | 2-6,10 | F02D41/00 G01M15/11 |
| X | US 6 453 734 B1 (TOMIKAWA SABURO [JP] ET AL) 24 septembre 2002 (2002-09-24) | 1,7-9 | F02P5/152 F02M26/49 |
| Y | * colonne 2, ligne 11 - colonne 5, ligne 26; figures 1,2 * ----- | 2-6,10 | ADD. F02P5/04 |
| Y | US 5 381 688 A (IKEDA HIROSHI [JP] ET AL) 17 janvier 1995 (1995-01-17) * colonne 4, ligne 10 - colonne 6, ligne 25 * ----- | 2-4 | F02D41/14 |
| Y | US 7 162 360 B2 (HONDA MOTOR CO LTD [JP]) 9 janvier 2007 (2007-01-09) * colonne 1, ligne 43 - colonne 1, ligne 62 * * colonne 7, ligne 32 - colonne 8, ligne 21 * ----- | 2-4 | |
| Y | JP 2006 266117 A (TOYOTA MOTOR CORP) 5 octobre 2006 (2006-10-05) * alinéas [0021] - [0027] * ----- | 5,6,10 | DOMAINES TECHNIQUES RECHERCHES (IPC) F02D G01M F02P F02M |

Le présent rapport a été établi pour toutes les revendications

| Lieu de la recherche | Date d'achèvement de la recherche | Examinateur |
|---|---|---|
| La Haye | 20 septembre 2021 | Deseau, Richard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 17 1774

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-09-2021

| Document brevet cité au rapport de recherche | | Date de publication | Membre(s) de la famille de brevet(s) | | Date de publication |
|---|---|---|---|---|---|
| JP H05280431 | A | 26-10-1993 | JP | 2985488 B2 | 29-11-1999 |
| | | | JP | H05280431 A | 26-10-1993 |
| US 6453734 | B1 | 24-09-2002 | DE | 19919126 A1 | 04-11-1999 |
| | | | JP | H11311151 A | 09-11-1999 |
| | | | US | 6453734 B1 | 24-09-2002 |
| US 5381688 | A | 17-01-1995 | JP | H05312085 A | 22-11-1993 |
| | | | US | 5381688 A | 17-01-1995 |
| US 7162360 | B2 | 09-01-2007 | CA | 2525020 A1 | 09-05-2006 |
| | | | DE | 102005053024 A1 | 24-05-2006 |
| | | | MX | PA05012046 A | 11-05-2006 |
| | | | US | 2006116812 A1 | 01-06-2006 |
| JP 2006266117 | A | 05-10-2006 | AUCUN | | |

EPO FORM P0460

Pour tout renseignement concernant cette annexe : voir Journal Officiel de l'Office européen des brevets, No.12/82

**EP 3 910 184 A1**

**RÉFÉRENCES CITÉES DANS LA DESCRIPTION**

**Documents brevets cités dans la description**

- FR 2793558